# EUROPÄISCHE PATENTANMELDUNG

(11) **EP 1 882 610 A2**
(43) Veröffentlichungstag der Anmeldung: **30.01.2008**
(21) Anmeldenummer: 07113261.7
(22) Anmeldetag: 26.07.2007
(51) Int. Cl.: B60N 2/58

(54) **Fahrzeugsitz und dafür geeignete Substrate**

(30) Priorität: 28.07.2006 AT 5802006 U; 31.07.2006 DE 202006011724 U
(71) Anmelder: Schaefer, Philipp, 30175 Hannover (DE)
(72) Erfinder: Schaefer, Philipp, 30175 Hannover (DE)
(74) Vertreter: Süling, Carsten

(57) **Zusammenfassung**

Die Erfindung betrifft eine Fahrzeugsitz (41) mit Sitzkissen (42) und Rückenlehne (43), bei dem, insbesondere ausschließlich, die der nächstgelegenen Fahrzeugtüre nahen, insbesondere zugewendeten, bzw. die erfahrungsgemäß der größten Beanspruchung beim Ein- und Aussteigen unterliegenden, Teilbereiche der Oberfläche des Fahrzeugsitzes (41), insbesondere des Sitzkissens (42) und/oder der Rückenlehne (43), aus einem hochabriebfesten Substrat gefertigt bzw. damit bezogen sind (Fig. 7).

## Beschreibung

Die vorliegende Erfindung betrifft einen Fahrzeugsitz mit Sitzkissen (42) und Rückenlehne (43), bei dem, insbesondere ausschließlich, die der nächstgelegenen Fahrzeugtüre nahen, insbesondere zugewendeten, bzw. die erfahrungsgemäß der größten Beanspruchung beim Ein- und Aussteigen unterliegenden, Teilbereiche der Oberfläche des Fahrzeugsitzes (41), insbesondere des Sitzkissens (42) und/oder der Rückenlehne (43), aus einem hochabriebfesten Substrat gefertigt oder damit bezogen sind.

Insbesondere betrifft die vorliegende Erfindung einen Fahrzeugsitz (41) mit einem Sitzkissen (42) und einer Rückenlehne (43), wobei das Sitzkissen (42) eine Sitzfläche (47) aufweist, die beidseitig von zwei Sitzwangen (48a,48b) begrenzt ist und die Rückenlehne (43) eine Rückenauflagefläche (45) aufweist, die beidseitig von zwei Rückenlehnenwangen (46a,46b) begrenzt ist, dadurch gekennzeichnet, dass die der nächstgelegenen Fahrzeugtüre nahe einstiegsnahe Sitzwange (48a) und/oder die der nächstgelegenen Fahrzeugtüre nahe einstiegsnahe Rückenlehnenwange (46a) bzw. insbesondere der nächstgelegenen Fahrzeugtüre zugewandte Teilbereiche der einstiegsnahen Sitzwange (48a) und/oder der einstiegsnahen Rückenlehnenwange (46a) aus einem hochabriebfesten Substrat gefertigt bzw. damit bezogen sind.

Jährlich werden Millionen von m² Leder für Fahrzeugsitzbezüge verarbeitet. Der Trend ist steigend. In der Regel werden dafür nach herkömmlichen Methoden zugerichtete Rindleder verwendet. Meistens weisen diese Leder eine geprägte Oberfläche auf. Diese mit einer Kunststoffzurichtung versehenen und geprägten Leder erfüllen im Großen und Ganzen die an sie gestellten Anforderungen. Herkömmlich hergestellte Leder werden in der Regel geprägt. Vor der Prägung werden sie mit einer pigmentierten Grundierschicht versehen, welche direkt auf das Leder aufgetragen wird. Diese Grundierschicht ist weicher als die dünne Finishschicht, sie ist mehr oder weniger thermoplastisch und verfügt über keine nennenswerte Abriebeigenschaft. Das Prägen geschieht unter Anwesenheit von Wärme und Druck. Um eine gute Narbausbildung zu gewährleisten muss diese Grundierschicht zwangsläufig aus mehr oder weniger thermoplastischen Kunststoff bestehen.

Die Finishschicht bestimmt bei diesem herkömmlich hergestelltem Leder die Haptik, Glanzgrad und die Farbe. Sie ist sehr dünn und nicht, oder nicht nennenswert thermoplastisch und damit auch verantwortlich für die Abriebeigenschaften. Die Finishschicht ist in der Regel dünner als 0,02 mm.

Wenn diese Leder auch im Einstiegsbereich eines Sitzes verwendet werden, kommt es oft nach kurzer Zeit zu Beschädigungen der Beschichtung an bestimmten, besonders beanspruchten Stellen, insbesondere dort, wo das Leder unter Dehnungsspannung steht oder unter Umbugkanten und im Bereich von Nähten. Wenn die sehr dünne Finishschicht erst einmal beschädigt ist, ist nach kurzer Zeit an diesen Stellen die gesamte Beschichtung abgescheuert. Diese abgescheuerten Stellen sind optisch störend und wertmindernd und geben Anlass zu kostspieligen Reklamationen. Eine erhebliche Schwachstelle, die enorme Kosten verursacht, ist die nicht genügende Abriebfestigkeit bei Wärme. Besonders die wulstartigen Erhöhungen im Seitenbereich der Einstiegsseite sind oft nach geringem Gebrauch beschädigt. Insbesondere dann, wenn auf oder an dieser wulstartigen Erhöhung auch Nähte vorhanden sind, bei denen die Finishschicht gedehnt ist und unter Spannung steht.

Die nicht ausreichende Abriebfestigkeit bei erhöhter Innenraumtemperatur des Fahrzeuges in Kombination mit Reibung führt somit beschleunigt zu einem vorzeitigen Verschleiß.

Der Erfindung liegt somit die Aufgabe zugrunde, einen Fahrzeugsitz zu schaffen, dessen Bezug im Sitz- und Lehnenbereich auch an den besonders kritischen Stellen, im Einstiegsbereich den Beanspruchungen in allen Klimazonen gerecht wird. Weiterhin ist es Aufgabe der Erfindung, kostenträchtige Reklamationen zu beseitigen.

Diese Aufgaben werden wie vorstehend definiert gelöst. Dabei geht die Erfindung davon aus, für die abriebgefährdeten Bereiche ein hochabriebfestes Substrat zu verwenden, welches zumindest teilweise im Umkehrverfahren auf einer Silikonunterlage hergestellt wurde.

Bei hochabriebfesten Substraten kann es sich um beliebige geeignete Materialien handeln, beispielsweise Textilien wie Gewirken oder Geweben aus natürlichen oder synthetischen Fasern, weiterhin Vliesstoffe (Non-Wovens), Substrate aus Mikrofasern, und insbesondere um Leder.

Unter dem Begriff "Leder" wird im Rahmen der vorliegenden Erfindung sowohl Naturleder verstanden, dessen angeschliffene Narbenseite mit einer Beschichtung versehen ist, als auch Spaltleder, dessen angeschliffene Oberfläche mit einer Beschichtung versehen ist.

Unter Fahrzeugsitzen werden im Zusammenhang mit der vorliegenden Erfindung Sitze für eine oder mehrere Personen verstanden, wobei die betreffenden Sitze eingebaut sind in einem Flugzeug oder in einem Fahrzeug, beispielsweise in einem Boot oder Schiff und insbesondere in einem Automobil wie beispielsweise einem Bus oder einem Personenkraftfahrzeug.

Diese, vorzugsweise teilweise im Umkehrverfahren hergestellten, Substrate sind in allen Schichten hochabriebfest und nicht thermoplastisch. Dadurch, dass die Prägung nicht durch eine thermoplastische Verformung, wie bei herkömmlichen Substraten, entsteht, sondern in-situ, erfolgt die Überführung eines flüssigen Kunststoffmaterials in den festen Zustand auf einer Silikonunterlage. Die Silikonunterlage gestaltet nicht nur die Oberflächenstruktur, sondern ist auch verantwortlich für die Haptik und den Glanzgrad der Oberfläche. Die nach diesem Verfahren hergestellten hochabriebfesten Substrate besitzen kein zusätzliches Oberflächenfinish. Jede Schicht dieser nach diesem Verfahren hergestellten Substrate ist nicht thermoplastisch, aber hochabriebfest.

Bei herkömmlichen Ledern würde es nichts nutzen, wenn die thermoplastische nicht pigmentierte Grundierschicht dicker wäre. Es hätte allenfalls den Nachteil, dass die sowieso geringfügige Wasserdampfdurchlässigkeit noch schlechter wäre.

Bei den für die beanspruchten Stellen vorgeschlagenen hochabriebfesten Substraten ist die Gesamtbeschichtungsstärke im wesentlichen gleich stark wie bei den herkömmlichen Ledern. Ihre Wasserdampf- und Luftdurchlässigkeit liegt aber höher als bei den herkömmlich finishierten Ledern.

Herkömmliche Autopolsterbezugsleder aus verschiedenen Regionen der Welt und von verschiedenen Herstellern zeigen beim Taber-Abrieb-Test nach DIN 53109, mit dem Reibrad H 18 mit 1000 g Belastung, bei Normaltemperaturen bereits nach 150 Zyklen Beschädigungen, und wenn man einen Draht (+ 0,5 mm) unter den Prüfling legt, um eine Naht zu simulieren, ist die Beschichtung bereits nach 100 Zyklen an den Erhöhungen durch Abrieb vollständig entfernt, so dass man an diesen Stellen die Faserstruktur, beispielsweise die Faserstruktur der Narbenschicht sieht.

Bei einer Substraterwärmung auf +60°C werden erheblich schlechtere Werte erzielt. Vorgeschlagene hochabriebfeste Substrate zeigt bei der gleichen Prüfmethode zwischen 4 und 10 mal höhere Werte bei Normaltemperatur und zwischen 7 und 15 mal höhere Werte bei erhöhter Prüftemperatur.

Die erfindungsgemäß verwendeten hochabriebfesten Substrate des erfindungsgemäßen Fahrzeugsitzes weisen vorzugsweise die gleiche Farbe, den gleichen Glanzgrad, die gleiche Haptik und die gleiche Narbung wie der Rest des Sitzbezuges aus herkömmlichen Substraten auf.

Dadurch, dass die Prägung gewissermaßen eingegossen wird, besitzen diese hochabriebfesten Substrate, wenn es sich bei ihnen um Leder handelt, eine hohe Narbstandfestigkeit, auch bei erhöhten Temperaturen und die Beschichtungsdicke ist im Gegensatz zu geprägtem Leder in der Narbenkuppe und in den Narbtälern gleich.

Die hochabriebfesten Substrate weisen nach einer Hydrolysealterung 7 Tage, +70°C und 95% Luftfeuchtigkeit noch die gleichen hohen Abriebswerte auf wie vorher und werden somit als hydrolysefest bezeichnet, auch im Zusammenhang mit der Polyurethandispersion oder einem Polyurethan.

Unter lichtecht wird im Zusammenhang mit der vorliegenden Anmeldung eine Note von mindestens fünf, bevorzugt besser als fünf verstanden, gemessen nach DIN EN ISO 105 B 02.

In einer Ausführungsform der vorliegenden Erfindung unterscheiden sich herkömmlich gefertigte Leder und hochabriebfeste Substrate dadurch, dass sich die herkömmlichen Leder bei Temperaturen an der Prägewalze zwischen 145° und 160° bzw. 165° umprägen lassen. Die hochabriebfesten Substrate sind hingegen so thermostabil, dass bei dieser Prägetemperatur eine Strukturveränderung in der Oberfläche nicht oder kaum stattfindet, weil die Gesamtbeschichtung nicht thermoplastisch, sondern allenfalls thermoelastisch ist.

Als hochabriebfestes Leder wird vorzugsweise ein Leder 2 eingesetzt, das als solches an sich aus der US 6,177,198 bekannt ist. Die genaue Beschreibung des Materials, inklusive Ausführungsbeispiele, wird zur vollständigen Offenbarung zusätzlich zu untenstehender Beschreibung an dieser Stelle aus der US 6,177,198 in den vorliegenden Text aufgenommen. Das hochabriebfeste Substrat 2, insbesondere das hochabriebfeste Leder 2, im Rahmen der vorliegenden Erfindung auch kurz als Substrat 2 oder Leder 2 bezeichnet, wird nachfolgend detailliert beschrieben.

Dabei wird Beschichtung als Oberbegriff für eine Zurichtung verwendet.

Das Substrat 2, bevorzugt Leder 2 ist vorzugsweise ein auf seiner angeschliffenen Oberfläche mit einer Beschichtung versehener Substratgrundkörper bzw. ein auf seiner angeschliffenen Oberfläche mit einer Zurichtung versehenes Leder, wobei die Beschichtung eine äußere Schicht mit einer bestimmten Oberflächengestaltung aufweist, die auf einer heißen, eine dieser Oberflächengestaltung entsprechende Strukturierung aufweisenden Unterlage vorfabriziert ist und aus einer verfestigten Polyurethan enthaltenden Dispersion gebildet ist, und weiterhin eine innere Schicht aufweist, die mit der angeschliffenen Oberfläche des Leders verbunden ist und gleichfalls aus einer verfestigten Polyurethan enthaltenden Dispersion gebildet ist.

Unter einer heißen Unterlage wird im Rahmen der vorliegenden Erfindung verstanden, dass die betreffende heiße Unterlage eine Temperatur im Bereich von 80 bis 150°C aufweist.

Die deutsche Patentschrift 32 29 150 offenbart ein zugerichtetes Spaltleder, bei welchem die Beschichtung aus zwei Schichten besteht. Hierbei wird auf eine auf eine Temperatur zwischen 70° und 185°C erwärmte Unterlage eine wässerige Polyurethan-dispersion aufgetragen, welche sich auf dieser Unterlage zu einem Film verfestigt, worauf dieser Film mit der Spaltlederoberfläche durch eine Mikrohohlkugeln enthaltende Polyurethandispersion unter Einwirkung von Druck und Vakuum verbunden wird. Dünne Beschichtungen lassen sich auf diese Weise nicht herstellen.

Die europäische Patentschrift 105 046 beschreibt ein zugerichtetes Spaltleder, bei welchem die Beschichtung gleichfalls aus zwei Schichten besteht, von welchen die innere, dem Spaltleder benachbarte Schicht zwischen 0,12 mm und 0,45 mm stark ist, also eine beträchtliche Dicke aufweist, wodurch die Eigenschaften des Leders nachteilig beeinflusst werden.

Aus der deutschen Offenlegungsschrift 195 10 242 ist bereits ein vollnarbiges Naturleder bekannt geworden, welches auf seiner Narbenseite mit einer Beschichtung versehen ist, die auf aus der Naturlederhaut herausgeschnittenen Formatteilen aufgebracht wird. Die Beschichtung besteht hierbei aus zwei Schichten, welche durch Verfestigung einer wässerigen, Polyurethan enthaltenden Kunststoffdispersion gebildet sind, und weist eine Dicke bis 0,13 mm auf.

Aus der deutschen Offenlegungsschrift 195 10 240 ist bekannt, auf einen eine vorgegebene Berandung aufweisenden, aus Leder bestehenden Trägerkörper eine Beschichtung mit einer unterschiedlichen Oberflächengestaltung aufzubringen, die eine Dicke bis 0,15 mm aufweist.

Aus der deutschen Gebrauchsmusterschrift 298 12 075.5 ist ein mit einer Beschichtung versehenes, vollnarbiges, eine vorgegebene Berandung aufweisendes Naturleder für die Herstellung von Autoteilen bekannt geworden, das aus drei jeweils aus einer Polyurethandispersion gebildeten Schichten besteht. Die äußerste, eine bestimmte Oberflächengestaltung aufweisende Schicht wird hierbei auf einer heißen, eine entsprechende Strukturierung aufweisenden, Unterlage vorfabriziert und weist eine größere Shore-Härte auf als die mittlere und die innere Schicht. Dadurch sollen die erforderlichen Eigenschaften des Leders für die Herstellung von Autoteilen gewährleistet werden.

Die deutsche Offenlegungsschrift 37 20 776 offenbart ein mit einer Beschichtung versehenes Ledermaterial, bei welchem die Beschichtung aus einer verhältnismäßig dicken, mit dem Leder verbundenen Ausgleichsschicht und einer darauf aufgebrachten, die Sichtfläche bildenden Abdeckschicht besteht, die aus zwei übereinander angeordneten Teilabdeckschichten bestehen kann, wobei gegebenenfalls zwischen den einzelnen Schichten zur Verbesserung der Haftung ein Primer vorgesehen sein kann. Die Ausgleichsschicht wird hierbei in Form eines Ausgleichssubstrates auf die Lederoberfläche aufgebracht, das als Ausgleichsgranulat ausgebildet ist. Eine derartige Beschichtung weist eine beträchtliche Dicke auf, so dass dadurch die Eigenschaften des Leders verloren gehen.

Bei den bekannten mit einer Beschichtung versehenen Ledern erfolgt die Verbindung der äußeren, die Sichtfläche aufweisenden Schicht mit dem Spaltleder dadurch, dass das die innere Schicht bildende Material in nassem Zustand entweder auf die Lederoberfläche oder auf die verfestigte äußere Schicht aufgebracht wird und anschließend ein Verpressen unter Wärmezufuhr erfolgt, wobei das nasse Material teilweise in das Leder eindringt und jedenfalls die Unebenheiten in der Lederoberfläche ausfüllt. Aus diesem Grunde ist es notwendig, eine entsprechend große Menge des die innere Schicht bildenden Materiales aufzubringen, um ein Ausfüllen der Unebenheiten in der Lederoberfläche und eine sichere Verbindung zu gewährleisten, was die erwähnten Dickenverhältnisse mit sich bringt. Dies hat zur Folge, dass die bekannten zugerichteten Leder nur eine geringe Wasserdampfdurchlässigkeit und Wasserdampfzahl aufweisen und daher den vielfach an Leder gestellten Anforderungen nicht entsprechen.

Die Eigenschaften eines erfindungsgemäßen mit einer Beschichtung versehenen Substrats werden verbessert. Ein erfindungsgemäßes Substrat und insbesondere ein solches Leder wird für die Herstellung von Innenausstattungen von Transportmitteln, wie Autos, Flugzeugen und Schiffen, beispielsweise für die Herstellung von Innenverkleidungen, Seitenverkleidungen von Türen, Lenkradüberzügen oder dergleichen, aber auch für die Herstellung von Schuhen, insbesondere Arbeitsschuhen sowie von Reisegepäckstücken besser verwendbar gemacht, wobei die Stärke der Beschichtung in gewünschter Weise gering gehalten werden kann. Weiterhin wird die Wasserdampfdurchlässigkeit und Wasserdampfzahl beträchtlich erhöht. Weiterhin wird die Abriebfestigkeit, Lichtechtheit, Hitzebeständigkeit, Chemikalien- und Lösungsmittelfestigkeit sowie Narbstandfestigkeit erhöht. Weiterhin können die aus dem mit einer Beschichtung versehenen Leder hergestellten Teile stabil verformt werden, wobei diese Teile nach ihrer Verformung die vorgegebene Gestalt beibehalten, wobei dennoch der durch die Beschichtung gegebene Oberflächenschutz gewährleistet ist. Schließlich weist die Sichtseite des Leders eine unterschiedlich gestaltete Oberfläche auf, sowie ist sie mit Darstellungen versehen, die nicht gesondert nachträglich, beispielsweise durch Laserbehandlung aufgebracht werden müssen.

Insbesondere dann, wenn die innere Schicht aus zwei von einer verfestigten, vernetzten Polyurethandispersion gebildeten und durch Anwendung von Druck und Wärme miteinander verschweißten Lagen besteht und dünner ist als die äußere Schicht, wobei das Verschweißen der beiden die innere Schicht bildenden Lagen nach deren Verfestigung, jedoch vor dem Wirksamwerden des Vernetzers erfolgt, ist es möglich, diese innere Schicht mit einer Stärke unter 0,03 mm auszubilden, da die beiden die innere Schicht bildenden Lagen vor ihrer Verfestigung nicht wie bei bekannten Verfahren einem Pressdruck ausgesetzt werden, der eine entsprechende Menge des die innere Schicht bildenden Dispersionsmaterials erforderlich macht, um eine sichere Verbindung zwischen der äußeren Schicht und der Substratoberfläche zu gewährleisten. Bei dieser Vorgangsweise werden aber in dem Fall, dass es sich bei dem Substrat um ein poröses Substrat wie insbesondere Leder handelt, die Poren in der äußeren Schicht und die Hohlräume im Substrat in unerwünschter Weise ausgefüllt. Durch die Erfindung hingegen wird es möglich, die innere Schicht so durchlässig auszubilden, dass das Substrat eine äußerst hohe Wasserdampfdurchlässigkeit im Bereich von 1 bis 4 mg/cm²·h, bevorzugt von mehr als 3 mg/cm²·h, und eine Wasserdampfzahl von mehr als 25 mg/cm² nach Europanorm E 344-1 aufweist und somit den Anforderungen entspricht, die an die aus einem solchen Substrat und insbesondere Leder gefertigten Teile gestellt werden.

Die vorliegende Erfindung ermöglicht es, die innere Schicht so auszubilden, dass sie keinen geschlossenen Film bildet, wodurch die Wasserdampfdurchlässigkeit verbessert wird.

Vorzugsweise weist die äußere Schicht ausgeprägte elastomere Eigenschaften und keine thermoplastischen Eigenschaften auf und stellt sich nach einer Dehnung bei einer Temperatur zwischen 100°C und 120°C vollständig zurück, wogegen die innere Schicht im Vergleich zur äußeren Schicht keine ausgeprägten elastomeren Eigenschaften aufweist und bei einer Temperatur zwischen 100°C und 120°C eine messbare bleibende Dehnung aufweist. Dadurch wird sichergestellt, dass nach einer Verformung eines Lederzuschnittes, beispielsweise zu einer Innenverkleidung einer Autotüre, zu einer Armaturenverkleidung eines Autos oder zu einem Schuhschaft dieser Lederzuschnitt die bei der Verformung erhaltene Gestalt beibehält. Die bei aus einem elastomeren Material bestehenden Schichten auftretende Rückstellkraft wird somit wesentlich verringert. Die geringere elastomere Eigenschaften als die äußere Schicht aufweisende innere Schicht bewirkt, abhängig vom Grad ihrer Vernetzung, dass sich beim Dehnen die Moleküle ausrichten und orientieren, so dass kaum Bestreben besteht, in die ursprüngliche Ausgangslage zurückzukehren. So bleibt bei einem erfindungsgemäßen zugerichteten Leder die Oberflächengestaltung der äußeren Schicht, auch wenn sie große Unebenheiten bzw. Erhebungen und Vertiefungen aufweist, bei einer Dehnung von 30%, wie sie bei der Herstellung von Lenkradüberzügen, Verkleidungen von Mittelkonsolen von Automobilen, Schuhoberteilen u.dgl., auftritt, weitgehend erhalten, im Gegensatz zu den bekannten mittels Prägung zugerichteten Ledern, wo bereits bei geringer Dehnung eine Verflachung der Oberfläche erfolgt. Beim thermischen Verschweißen der beiden die innere Schicht bildenden Lagen wird nämlich das die innere Schicht bildende Material durch das Einwirken von Druck und Wärme gedehnt und somit gereckt, was zumindest teilweise zur erwähnten Ausrichtung und Orientierung der Moleküle führt. Dadurch wird bewirkt, dass diese innere Schicht trotz ihrer geringen Stärke eine besonders große mechanische Festigkeit aufweist.

Vorzugsweise ist die äußere Schicht porös ausgebildet, wodurch die Rückstellkraft der Beschichtung weiter reduziert und die Wasserdampfdurchlässigkeit und Wasserdampfzahl weiter verbessert werden. Die poröse Struktur, welche insbesondere auch offenzellige, durchgehende Poren aufweist, entsteht bei der Vorfabrikation dieser äußeren Schicht auf der heißen, die erwähnte Strukturierung aufweisenden Unterlage. Vorzugsweise ist die Wand dieser durchgehenden Poren in der äußeren Schicht zumindest teilweise vom Material der dieser äußeren Lage benachbarten Lage der inneren Schicht ausgekleidet, dieses Material füllt somit diese Poren nicht vollständig aus, so dass die für die große Wasserdampfdurchlässigkeit und Wasserdampfzahl erforderliche Porosität der äußeren Schicht erhalten bleibt.

In einer Ausführungsform der vorliegenden Erfindung weist die äußere Schicht eine Dichte unter 0,95 g/cm³ auf.

In einer Ausführungsform der vorliegenden Erfindung weist die Polyurethan-Dispersion, die zur Herstellung der äußeren Schicht dient, einen Feststoffanteil von mehr als 35% auf.

In einer Ausführungsform der vorliegenden Erfindung kann die äußere Schicht mit unterschiedlichen Oberflächengestaltungen versehen sein. Beispielsweise kann die äußere Schicht bei ihrer Herstellung mitgeformte Darstellungen oder Symbole aufweisen. In einer besonderen Ausführungsform der vorliegenden Erfindung sind die bei der Herstellung der äußeren Schicht mitgeformten Darstellungen oder Symbole erhaben und ragen von der benachbarten Oberfläche der äußeren Schicht empor. Dabei kann die Dicke der äußeren Schicht im Bereich der erhabenen Darstellungen und Symbole im wesentlichen gleich der Dicke der äußeren Schicht im Bereich der benachbarten Oberfläche sein.

In einer Ausführungsform der vorliegenden Erfindung kann die Oberfläche der äußeren Schicht mit Markierungen versehen sein.

In einer Ausführungsform der vorliegenden Erfindung kann die äußere Schicht mehrere unterschiedliche Farben aufweisen.

In einer Ausführungsform der vorliegenden Erfindung kann die äußere Schicht aus mehreren übereinander angeordneten Lagen bestehen, die so gebildet werden, dass man eine Polyurethan enthaltende Dispersion in mehreren Lagen auf eine heiße Unterlage sprüht und sich jeweils zumindest partiell verfestigen lässt, bevor man die nächste Lage aufsprüht. Diese verschiedenen Lagen können unterschiedliche Pigmentanteile aufweisen. Bevorzugt ist es, wenn die eine Oberfläche oder Sichtseite der Beschichtung bildende Lage einen geringeren Pigmentanteil aufweist als die übrigen Lagen.

Zweckmäßig enthält die äußere Schicht eine größere Menge an Pigment, beispielsweise 6 bis 8 Gew.-%, bezogen auf die jeweilige Formulierung, wogegen die innere Schicht eine geringere Menge an Pigment, beispielsweise 0,5 bis 5 Gew.-%, vorzugsweise kein Pigment, aufweist. Dadurch wird sichergestellt, dass das Verschweißen der beiden die inneren Schicht bildenden Lagen durch Pigmente nicht gestört wird.

In einer Ausführungsform der vorliegenden Erfindung setzt man zur Herstellung von mindestens einer Schicht mindestens eine Polyurethan-Dispersion ein, die hergestellt ist aus einer Weichphase aus höhermolekularen Polyhydroxylverbindungen, z. B. aus Polyester-, Polycarbonat- oder Polyethersegmenten, und einer Urethan-Hartphase, gebildet aus niedermolekularen Kettenverlängerungsmitteln und Di- oder Polyisocyanaten. Dabei sind unter höhermolekularen Polyhydroxylverbindungen beispielsweise Polyether wie Polyethylenglykol, Polypropylenglykol oder Polytetrahydrofurane, jeweils mit einem mittleren Molekulargewicht Mₙ im Bereich von 200 bis 5000 g/mol, oder Polyesterdiole oder Polycarbonatdiole mit einem mittleren Molekulargewicht Mₙ im Bereich von 200 bis 5000 g/mol zu verstehen. Unter niedermolekularen Kettenverlängerungsmitteln sind dabei Diole wie beispielsweise 1,4-Butandiol, 1,6-Hexandiol, 1,12-Dodekandiol oder Neopentylglykol zu verstehen. Als Di- oder Polyisocyanate sind Isophorondiisocyanat, Toluylendiisocyanat, 1,4-Dicyclohexylmethyldiisocyanat (MDI) und Hexamethylendiisocyanat (HDI) besonders bevorzugt.

In einer Ausführungsform der vorliegenden Erfindung können in die äußere Schicht und/oder in die innere Schicht Mikrohohlkugeln, vorzugsweise in einer Menge zwischen 3 und 6 Vol.-%, eingebettet sein. Solche Mikrohohlkugeln bestehen beispielsweise aus einer dünnen Hülle aus Polyvinylidenchlorid-Copolymerisat und enthalten im Inneren ein Gas, vorzugsweise Luft. Durch die Einbettung dieser Mikrohohlkugeln kann die Rückstellkraft der einzelnen Schichten zusätzlich reduziert werden, ohne dass sich dadurch die mechanischen Eigenschaften dieser Schichten verschlechtern.

Die äußere Schicht besteht vorzugsweise im wesentlichen aus verfestigtem Polyester-Polyurethan und weist bereits ohne Zusatz eines Vernetzers in getrocknetem Zustand einen Erweichungspunkt zwischen 180°C und 240°C auf, oder diese äußere Schicht besteht im wesentlichen aus verfestigtem Polycarbonat-Polyurethan oder verfestigtem Polyether-Polyurethan und weist bereits ohne Zusatz eines Vernetzers in getrocknetem Zustand einen Erweichungspunkt zwischen 180°C und 240°C auf.

Die innere Schicht weist vorzugsweise eine andere chemische Beschaffenheit auf als die äußere Schicht und besteht entweder überwiegend aus verfestigtem Polyester-Polyurethan und weist in getrocknetem Zustand ohne Zusatz eines Vernetzers einen Erweichungspunkt zwischen 45°C und 95°C auf, oder sie besteht überwiegend aus verfestigtem Polycarbonat-Polyurethan oder verfestigtem Polyether-Polyurethan und weist in getrocknetem Zustand ohne Zusatz eines Vernetzers einen Erweichungspunkt zwischen 45°C und 95°C auf. Ein solcher Erweichungspunkt ermöglicht ein thermisches Verschweißen bei relativ geringen Temperaturen.

Die Oberfläche der äußeren Schicht kann einheitlich ausgebildet sein und im Falle eines Leders beispielsweise die Struktur eines Nappaleders oder eines Nubukleders aufweisen. Es ist jedoch im Rahmen der Erfindung auch möglich, durch unterschiedliche Oberflächengestaltung der Unterlage, auf welcher die äußere Schicht vorfabriziert wird, diese äußere Schicht mit verschiedenen unterschiedlichen Oberflächen zu versehen, so dass beispielsweise bei einem Zuschnitt für einen Schuhschaft oder insbesondere für den erfindungsgemäßen Fahrzeugsitz die Oberfläche im Kappenbereich das Aussehen eines Nubukleders und im übrigen Bereich das Aussehen eines Narbenleders oder bei Zuschnitten für Fahrzeugsitze der mittlere Bereich eine glatte und die seitlichen Bereiche eine rauhe Lederoberfläche, beispielsweise nach Art eines Nubukleders, aufweisen, um ein seitliches Verrutschen der darauf sitzenden Person zu verhindern. Es ist also nicht erforderlich, einen solchen Schuhschaftzuschnitt bzw. einen solchen Fahrzeugsitz aus mehreren miteinander vernähten, eine verschiedene Oberflächengestaltung aufweisenden Teilen herzustellen. Es kann aber auch die äußere Lage bei ihrer Herstellung mitgeformte Darstellungen, wie Logos oder andere Symbole, beispielsweise Markenzeichen von Herstellerfirmen oder Stickereiimitationen, aufweisen, die bisher durch aufwendige Laserbehandlung der Lederoberfläche jedes einzelnen Stückes hergestellt wurden. Hierbei ist es auch möglich, die mitgeformten Darstellungen oder Symbole erhaben auszubilden, so dass sie von der benachbarten Oberfläche der äußeren Schicht emporragen und der Eindruck erweckt wird, diese Darstellungen oder Symbole wären nachträglich beispielsweise durch Sticken hergestellt worden. Trotzdem ist die Dicke der äußeren Schicht im Bereich der erhabenen Darstellungen und Symbole im wesentlichen gleich der Dicke der äußeren Schicht im Bereich der benachbarten Oberfläche, so dass die Eigenschaften des mit einer Beschichtung versehenen Leders durch diese erhabenen Darstellungen und Symbole nicht beeinträchtigt werden.

Sollen aus dem Leder mehrere Formatteile ausgeschnitten oder ausgestanzt werden, so ist es von Vorteil, wenn die äußere Schicht mit Markierungen versehen ist, welche die Umrandung der einzelnen Formatteile kennzeichnen.

In einer Ausführungsform der vorliegenden Erfindung können zumindest einzelne der Schichten mit Perforationen versehen sein.

Dazu kann es zweckmäßig sein, wenn die von den beiden Schichten gebildete Beschichtung zumindest teilweise mit Perforationen versehen ist, wodurch die Wasserdampfdurchlässigkeit zusätzlich erhöht wird.

Vorzugsweise ist das eingesetzte Leder chromfrei und/oder foggingarm.

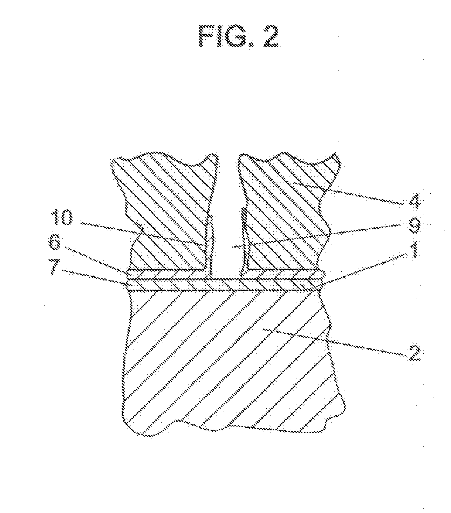

Die äußere Schicht 4 wird auf einer Unterlage vorfabriziert, deren Oberseite aus Silikonkautschuk und deren Unterseite aus Metall besteht und die von der aus Metall bestehenden Unterseite her erwärmt wird, so dass die Oberfläche der Oberseite eine Temperatur von etwa 100°C aufweist. Auf diese eine Strukturierung aufweisende Oberseite aus Silikonkautschuk wird eine vorzugsweise wässrige Polyurethandispersion mit elastomeren Eigenschaften in einer Menge aufgebracht, dass nach ihrer Verfestigung die äußere Schicht 4 eine Stärke zwischen 0,01 und 0,08 mm besitzt. In die Polyurethandispersion können Mikrohohlkugeln eingebettet sein. Es ist auch die Verwendung einer Polyurethandispersion ohne Vernetzer möglich, jedoch wird durch einen Vernetzer der Schmelzpunkt der äußeren Schicht 4 und damit die Hitzestabilität erhöht. Dadurch, dass die äußere Schicht 4 auf der Unterlage vorfabriziert wird, bevor eine Verbindung mit der inneren Schicht 5 stattfindet, erfolgt bei ihrer Verfestigung keine Verflachung. Die Herstellung dieser äußeren Schicht 4 kann durch mehrfaches Aufsprühen einer wässerigen Polyurethandispersion auf die heiße Unterlage erfolgen, wobei nach der Verfestigung eine homogene, einstückige und einschichtige Schicht entsteht. Die durch die einzelnen Sprühaufträge gebildeten Lagen können erfindungsgemäß unterschiedliche Pigmentanteile enthalten. Vorzugsweise weist die durch den ersten Sprühauftrag einer Polyurethan enthaltenden Dispersion auf die heiße Unterlage gebildete Lage einen geringeren Pigmentanteil auf als die übrigen Lagen, wodurch die Farbabriebfestigkeit der Beschichtung wesentlich verbessert wird. Wie aus Fig. 2 hervorgeht, weist die äußere Schicht 4 eine Vielzahl durchgehender Poren 9 auf, wobei bei einer bevorzugten Stärke von 0,04 mm diese Poren 9 bei Beleuchtung von der Rückseite dieser Schicht 4 her deutlich erkennbar sind.

Die innere Schicht 5 besteht aus zwei Lagen 6, 7 von anderer chemischer Beschaffenheit als die äußere Schicht 4 und weist eine Stärke zwischen 0,008 mm und 0,03 mm auf und wird jeweils wesentlich dünner als die äußere Schicht 4 gewählt. Zur Bildung dieser inneren Schicht wird so vorgegangen, dass die die Lage 6 bildende vernetzbare Polyurethandispersion auf die verfestigte, auf der Unterlage befindliche äußere Schicht 4 und die die Lage 7 bildende vernetzbare Polyurethandispersion auf die faserige Oberfläche 1 des Leders 2 aufgebracht wird. Zweckmäßig wird für beide Lagen 6, 7 eine vernetzbare Polyester- oder Polyether-Polyurethandispersion verwendet, welche sich chemisch anders verhält als die die äußere Schicht 4 bildende Polyurethandispersion, und welche im Gegensatz zu dieser die äußere Schicht 4 bildenden Polyurethan-dispersion keine Pigmente oder nur eine geringe Menge an Pigmenten enthält, durch welche das thermische Verschweißen gestört wird. Außerdem enthält diese die Lagen 6, 7 bildende Polyurethandispersion vorzugsweise weniger Feststoffe als die die äußere Schicht 4 bildende Polyurethandispersion, so dass nach Verfestigung ein unzusammenhängender Film besteht, durch den die Poren der äußeren Schicht 4 nicht verschlossen werden.

Die Dicke der Lage 7 ist etwas größer als die Dicke der Lage 6, welche keinen geschlossenen Film bildet. Wie aus Fig. 2 hervorgeht, werden die in der äußeren Schicht 4 vorhandenen Poren 9 nicht verschlossen, sondern lediglich mit einer Auskleidung 10 versehen, was wesentlich für die große Wasserdampfdurchlässigkeit des zugerichteten Leders ist. In der Folge wird den vernetzbaren Polyurethandispersionen das Wasser entzogen, wobei das Wasser der die Lage 6 bildenden Polyurethandispersion durch Wärmezufuhr über die Unterlage verdampft und das Wasser der die Lage 7 bildenden Polyurethandispersion zum überwiegenden Teil in das Leder einzieht. Nach der Entfernung des Wassers weisen die beiden Lagen 6, 7 einen maximalen Anteil an Feststoffen, wie Polyurethan, Pigmente und Füllstoffe, von 80g, vorzugsweise zwischen 10g und 40g, pro m² auf. Nach der so bewirkten Trocknung wird noch vor Wirksamwerden des Vernetzers die auf der faserigen Oberfläche 1 des Leders befindliche Lage 7 auf die auf der verfestigten äußeren Schicht 4 befindliche Lage 6 aufgelegt, worauf auf die der Beschichtung 3 abgewendeten Seite 8 des Leders über eine druckausgleichende, druckelastische Gegendruckplatte ein Druck ausgeübt wird, und gleichgleichzeitig die Unterlage von der metallischen Unterseite her auf eine Temperatur im Bereich von 50°C bis 150°C, bevorzugt von 50 bis 130°C, besonders bevorzugt von 90°C, erwärmt wird, wodurch die beiden Lagen 6, 7 miteinander thermisch verschweißt werden. Eine weitere Erwärmung kann gegebenenfalls über zusätzliche Wärmequellen erfolgen. Die beiden Lagen 6, 7 weisen vor dem Vernetzen einen niedrigen Schmelzpunkt auf, so dass durch die zugeführte Wärme eine vollständige Verschweißung erfolgt. Da die Erwärmung in der Hauptsache über die Unterlage erfolgt, steigen sich allenfalls bildende Dampfblasen nach oben und werden vom Leder absorbiert.

Durch den bei der thermischen Verschweißung über die druckausgleichende druckelastische Gegendruckplatte ausgeübten Druck wird die Kontur der faserigen Oberfläche 1 an die dünne Beschichtung 3 angepasst, wobei die innere Schicht 5 keinen geschlossenen Film bildet, so dass durch die Porosität dieser inneren Schicht ein Entweichen von Restfeuchtigkeit in das Leder begünstigt wird. Durch die Ausübung des Druckes erfolgt weiterhin ein teilweises Recken der inneren Schicht 5, wobei der gereckte Anteil in der Folge nicht mehr zurückgeht.

Die beiden Lagen 6, 7 bilden eine homogene, untrennbare, innere Schicht 5, jedoch ist durch einen Mikroschnitt erkennbar, dass diese innere Schicht 5 durch Verschweißen von zwei vorverfestigten Lagen entstanden ist.

Unter "untrennbar" wird im Rahmen der vorliegenden Erfindung und im Zusammenhang mit zwei Schichten jeweils verstanden, dass sich die zwei Schichten manuell nicht oder nicht zerstörungsfrei trennen lassen.

Die innere Schicht 5 kann aber auch in einem Arbeitsvorgang hergestellt werden, also nicht aus zwei Lagen bestehen. In diesem Fall wird lediglich auf die angeschliffene Oberfläche des Leders 2 eine einen Vernetzer enthaltende Polyurethandispersion aufgebracht, worauf das Wasser bis auf eine Restmenge zwischen 5 g/m² und 25 g/m² entzogen wird, so dass eine innere Schicht 5 mit einer Dicke zwischen 0,008 mm und 0,03 mm gebildet wird. Anschließend wird das Leder mit seiner Oberfläche 1, auf welcher sich die aufgebrachte Polyurethandispersion befindet, auf die vorfabrizierte äußere Schicht 4 aufgelegt und es werden die beiden Schichten durch Anwendung von Druck und Wärme thermisch verschweißt, wobei durch die Restwassermenge die wärmeaktivierbaren Klebeeigenschaften verbessert werden, so dass auch hier mit einer Temperatur im Bereich von 50°C bis 150°C, bevorzugt von 50 bis 130°C, besonders bevorzugt von 90°C, das Ziel erreicht werden kann.

Bei Verwendung eines Vernetzers für die äußere Schicht 4 wird deren Alterungsbeständigkeit und Chemikalienfestigkeit verbessert.

Um einen unerwünschten Wasserzutritt zu verhindern, kann die der Beschichtung 3 abgewendete Seite 8 des Leders 2 mit einer dünnen Polymerbeschichtung versehen sein.

Die äußere Schicht 4 wird wieder auf einer heißen, eine Strukturierung aufweisenden Unterlage vorfabriziert, und zwar derart, dass man auf diese Unterlage eine vernetzbare, hydrolysefeste, lichtechte Polyurethandispersion, die ein Pigment und vorzugsweise 1 % eines Additivs auf Silikonbasis enthält, aufbringt und durch Erwärmung der Unterlage verfestigen lässt. Die Strukturierung der Unterlage ist derart, dass die sichtbare Oberfläche der äußeren Schicht 4 ein unterschiedliches Aussehen aufweist. Das eine solche äußerste Schicht 4 aufweisende Substrat 2, bevorzugt Leder 2 kann somit beispielsweise teilweise das Aussehen eines Kohlenstoffgewebes, teilweise das Aussehen von Nubukleder aufweisen, es kann aber auch ein Schriftzug, beispielsweise "Airbag" oder ein Firmenlogo, beispielsweise mit dem Aussehen einer Stickerei, aufscheinen. Weiterhin kann die Strukturierung der Unterlage derart sein, dass dann, wenn aus dem Leder mehrere Formatteile hergestellt werden, entsprechende Markierungen gebildet werden, die der Umrandung der in der Folge auszuschneidenden bzw. auszustanzenden Formatteile entsprechen.

Zur Herstellung der mittleren Schicht 11 wird auf die verfestigte, sich noch auf der Unterlage befindliche äußere Schicht 4 eine vernetzbare, hydrolysefeste, lichtechte Polyurethandispersion aufgebracht, die eine geringere Menge Pigment als die äußere Schicht 4 enthält. Diese mittlere Schicht 11 weist eine geringere Shorehärte als jene der äußeren Schicht 4 auf und ist, da sie auf der äußeren Schicht 4 gebildet wird, mit dieser äußeren Schicht 4 untrennbar verbunden.

Zur Verbindung der beiden Schichten 4, 11 mit der Oberfläche 1 des Leders 2 dient eine innere Schicht 5, die aus einem verfestigten, vernetzten, hydrolysefesten, lichtechten Polyurethan besteht und eine geringere Härte aufweist als die äußere Schicht 4 und die mittlere Schicht 11. Die innere Schicht besteht vorzugsweise aus einem verfestigten, stark vernetzten, hydrolysefesten, lichtechten Polyurethan. Zur besseren Verbindung kann gegebenenfalls zwischen der inneren Schicht 5 und der Oberfläche 1 des Leders 2 eine aus einem Klebstoff, insbesondere einer Polyurethan-Lösung gebildete Zwischenschicht 12 enthalten sein.

Unter "vernetzbar" wird im Rahmen der vorliegenden Erfindung und im Zusammenhang mit Polyurethan-Dispersionen verstanden, dass das dispergierte Polyurethan eine oder mehrere funktionelle Gruppen pro Molekül aufweist, beispielsweise Hydroxylgruppen oder Aminogruppen, die nach dem Auftragen beispielsweise auf dem Substratgrundkörper reagieren können.

Unter "stark vernetzt" wird im Rahmen der vorliegenden Erfindung verstanden, dass man eine höhere Konzentration oder einen höheren Anteil an Vernetzer, die bzw. der bei der Beschichtung bzw. insbesondere Zurichtung üblicherweise eingesetzt wird, einsetzt. vorzugsweise erhöht man den Anteil bzw. die Konzentration an Vernetzer um einen Faktor im Bereich von 1,3 bis 1,6.

Beispielsweise kann man in dem Fall, dass man zur Zurichtung eines Leders üblicherweise eine Konzentration an Vernetzer von 3 bis 4 Gew.-% wählt, erfindungsgemäß eine Konzentration an Vernetzer im Bereich von 4,5 bis 6 Gew.-% wählen.

Als Vernetzer sind grundsätzlich alle aus der Polyurethanchemie bekannten Verbindungen bekannt, die zwei oder mehr Polyurethanmoleküle, die funktionelle Gruppen aufweisen wie beispielsweise Hydroxylgruppen oder Aminogruppen, miteinander verbinden können. Beispielsweise kann es sich bei Vernetzern um Isocyanurate oder maskierte Isocyanurate handeln. Besonders bevorzugt sind Isocyanurate auf Basis von Hexamethylendiisocyanurat und hydrophil maskierte Isocyanurate auf Basis von Hexamethylendiisocyanurat. Ganz besonders bevorzugt sind Verbindungen der allgemeinen Formeln I a und I b 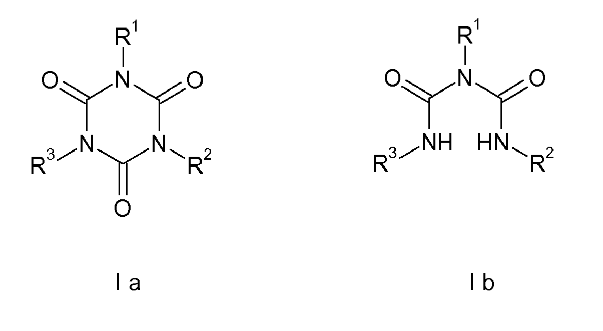 wobei R¹, R² und R³ verschieden oder vorzugsweise gleich sein können und gewählt werden aus A¹-NCO und A¹-NH-CO-X, wobei

A¹ ein Spacer mit 2 bis 20 C-Atomen ist, gewählt aus Arylen, unsubstituiert oder substituiert mit einer bis vier C₁-C₄-Alkylgruppen, Alkylen und Cycloalkylen, beispielsweise 1,4-Cyclohexylen. Bevorzugte Spacer A¹ sind Phenylen, insbesondere para-Phenylen, weiterhin Toluylen, insbesondere para-Toluylen, und C₂-C₁₂-Alkylen wie beispielsweise Ethylen (CH₂CH₂), weiterhin -(CH₂)₃-, -(CH₂)₄-, -(CH₂)₅-, -(CH₂)₆-, -(CH₂)₈-, -(CH₂)₁₀-, -(CH₂)₁₂-.
X gewählt wird O(AO)ₓR⁴, wobei

AO ist C₂-C₄-Alkylenoxid, beispielsweise Butylenoxid, insbesondere Ethylenoxid (CH₂CH₂O) oder Propylenoxid (CH(CH₃)CH₂O) bzw. (CH₂CH(CH₃)O),
x ist eine ganze Zahl im Bereich von 1 bis 50, bevorzugt 5 bis 25, und

R⁴ ist gewählt aus Wasserstoff und C₁-C₃₀-Alkyl, insbesondere C₁-C₁₀-Alkyl wie Methyl, Ethyl, n-Propyl, iso-Propyl, n-Butyl, iso-Butyl, sec.-Butyl, tert.-Butyl, n-Pentyl, isoPentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl, besonders bevorzugt C₁-C₄-Alkyl wie Methyl, Ethyl, n-Propyl, iso-Propyl, n-Butyl, iso-Butyl, sec.-Butyl und tert.-Butyl.

Besonders bevorzugte Vernetzer sind solche, bei denen R¹ und R² und R³ jeweils gleich (CH₂)₄-NCO, (CH₂)₆-NCO oder (CH₂)₁₂-NCO sind.

Als Klebstoff sind grundsätzlich alle bekannten Flüssigklebstoffe, beispielsweise Klebstofflösungen, Klebstoffdispersionen, Reaktivkleber oder Schmelzkleber, geeignet. In einer Ausführungsform handelt es sich bei Klebstoff um in einer wässrigen Lösung von Natrium-N-2-aminoethyl-β-alanat (1 Gew.-%) dispergiertes Polyester-Polyurethan, aufgebaut aus 4,5 Gew.-% Hexamethylendiisocyanat, 4,5 Gew.-% 2,4-Toluylendiisocyanat (TDI) und 90 Gew.-% Polyesterdiol aus 1,4-Butandiol und Adipinsäure, wobei Angaben in Gew.-% sich auf das betreffende Polyester-Polyurethan beziehen.

In einer Ausführungsform der vorliegenden Erfindung wird die Zwischenschicht 12 durch Aufsprühen des einen Feststoffanteil von weniger als 8% aufweisenden Klebstoffs auf die mit einem Schleifpapier mit einer Körnung zwischen 100 und 1000 angeschliffene Narbenoberfläche 1 des Leders 2 gebildet und weist nach dem Entzug des Lösungsmittels eine Dicke von zwischen 0,001 mm und 0,002 mm auf, so dass sie beim fertigen Produkt nur bei extremer Vergrößerung sichtbar ist. Durch diese Zwischensicht ergibt sich eine extrem große Nasshaftung zwischen der Narbenoberfläche 1 des Leders 2 und der Beschichtung 3.

Die innere Schicht 5 sowie die Zwischenschicht 12 bilden vorzugsweise keinen geschlossenen Film, um die erforderliche Wasserdampfdurchlässigkeit sicherzustellen.

Die Dicke der inneren Schicht 5 bzw. bei Vorhandensein einer Zwischenschicht 12 die Summe der Dicke der inneren Schicht 5 und der Zwischenschicht 12 beträgt weniger als 0,04 mm, vorzugsweise weniger als 0,02 mm und ist jedenfalls geringer als die Summe der Dicken der äußeren Schicht 4 und der mittleren Schicht 11.

Zur Erhöhung der Wasserdampfdurchlässigkeit kann die aus den einzelnen Schichten bestehende Beschichtung 3 mit in den Abbildungen dieser Anmeldung nicht dargestellten Perforationen versehen sein. Ferner ist es von Vorteil, wenn das Substrat 2, bevorzugt Leder 2 auf seiner der Beschichtung 3 abgewendeten Seite 8 mit einer dünnen Polymerbeschichtung versehen ist, die den Wasserzutritt von der Rückseite verhindert.

Gegebenenfalls kann auf die Oberfläche der äußeren Schicht 4 zusätzlich noch eine dünne Finish-Schicht aufgebracht werden, die beispielsweise Griffmittel oder den Glanzgrad verändernde Chemikalien enthält. Die Dicke einer solchen Finish-Schicht bleibt bei den angegebenen Dicken für die einzelnen Schichten unberücksichtigt, ebenso wie eine eventuell vorhandene sogenannte Schleifgrundierung oder Imprägnierung auf dem Substrat 2, bevorzugt Leder 2, sowie ein auf der Oberfläche 1 des Leders 2 angeordnetes dünnes Gewebe oder Gewirke.

Die Messung der Dicke der Beschichtung 3 erfolgt zwischen zwei runden Messscheiben bzw. Messtellern mit einem Durchmesser von 10 mm, wie sie für die Lederdickenmessung üblich sind. Die aus den Schichten 4 und 5 bestehende Beschichtung 3 wird vor der Messung mit einem scharfen Werkzeug, z.B. einem Rasiermesser vom Substrat 2, bevorzugt Leder 2 abgeschält. Die Dicke der Schichten 4 und 5 wird bei einem Anpressdruck von 5 kg ermittelt, so dass Unebenheiten der strukturierten Oberfläche der Beschichtung ausgeglichen werden. Vor der Dickenmessung ist darauf zu achten, dass keine die Dicke beeinflussenden Fasern des Leders auf der Schicht 5 vorhanden sind.

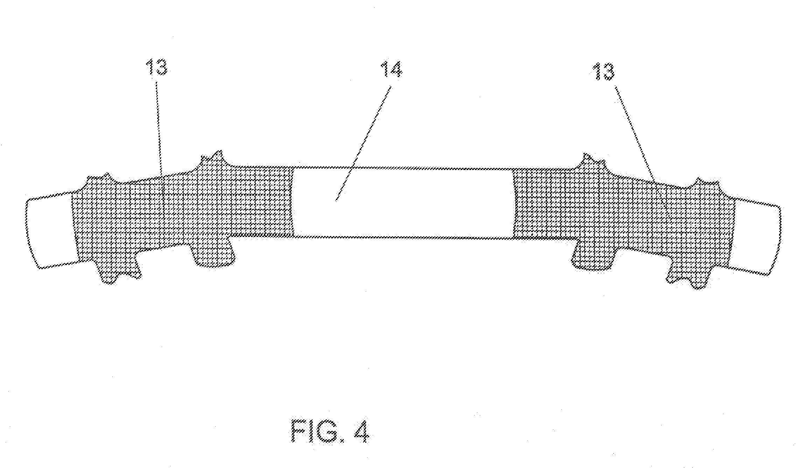

Werden Lederzuschnitte hergestellt, deren Sichtseite verschiedenfarbig ist, also beispielsweise ein Lenkradüberzug gemäß Fig. 4, der im Sprossenbereich 13 ein schwarzes und im übrigen Bereich 16 ein braunes Aussehen besitzt, so wird so vorgegangen: Zunächst werden die Bereiche 14 auf der heißen Unterlage mit einer Maske abgedeckt und hierauf eine schwarz pigmentierte Polyurethan enthaltende Dispersion auf die heiße Unterlage aufgesprüht. Anschließend wird die Maske entfernt und es wird auf die heiße Unterlage sowie auf die bereits teilweise verfestigte schwarze Polyurethan-dispersion eine braun pigmentierte, Polyurethan enthaltende Dispersion aufgesprüht. Im Bereich 13 ist somit die äußere Schicht 4 von mindestens zwei Sprühaufträgen gebildet und im übrigen Bereich 14 durch mindestens einen Sprühauftrag. Die äußere Schicht 4 ist im Bereich 13 nur unwesentlich dicker als im Bereich 14 und auch dort dünner als 0,08 mm. Dieses Verfahren zur Herstellung von Leder mit unterschiedlichen Farben in einem Arbeitsschritt hat nicht nur den Vorteil, dass ein nachträglicher Farbauftrag entfallen kann, sondern auch, dass die unterschiedlichen Farbbereiche besonders abriebfest sind.

Anschließend wird das Leder mit der darauf befindlichen, aus der teilweise verfestigten Polyurethandispersion gebildeten Lage auf die auf der äußeren Schicht befindliche, aus der teilweise verfestigten Polyurethandispersion gebildete Lage aufgelegt, worauf die beiden Lagen durch Anwendung von Druck und Wärme thermisch verschweißt werden. Hiezu dient zur Ausübung eines Druckes eine Druckvorrichtung 23, welche in Pfeilrichtung 24 auf und ab bewegt werden kann. Die Druckvorrichtung 23 weist eine druckelastische Gegendruckplatte 25 auf, welche in einem Gehäuse 26 befestigt ist. Zum Hohlraum 27 führt eine Druckleitung 28, über welche nach Absenken der Vorrichtung 23 ein Druckmedium zugeführt wird, über welches die druckelastische Gegendruckplatte 25 an die Rückseite des Leders mit einem Druck zwischen 0,5 und 5,5 kg/cm² angepresst wird. Dieser Druck wird in einem Zeitraum zwischen 3 und 20 sec aufrechterhalten, jedoch mindestens so lange, bis eine Temperatur an der inneren Schicht 5 von mindestens 45°C erreicht ist. Gleichzeitig erfolgt eine Wärmezufuhr über die Wärmequellen 21, wodurch ein thermisches Verschweißen der beiden die innere Schicht bildenden Lagen erfolgt.

Zumindest eine der die Beschichtung bildenden Schichten kann vorteilhafterweise aus stark vernetztem Polyurethan besteht.

Zumindest eine der die Beschichtung bildenden Schichten kann vorteilhafterweise, insbesondere bis zu 350°C hitzebeständige, anorganische Partikel enthalten. Bevorzugt enthält zumindest eine der die Beschichtung bildenden Schichten bis zu 350°C hitzebeständige organische Partikel, insbesondere aus Silikonkautschuk oder aus einem Fluor-Polymerisat.

Bei erfindungsgemäßen Fahrzeugsitzen können gemäß einer bevorzugten Ausführungsform, die der nächstgelegenen Fahrzeugtüre nahen und die erfahrungsgemäß der größten Beanspruchung beim Ein- und Aussteigen unterliegenden Teilbereiche der Oberfläche des Fahrzeugsitzes, d.h. des 42 und/oder der Rückenlehne 43, aus hochabriebfestem Substrat 2, bevorzugt Leder 2 gefertigt bzw. damit bezogen sein. Bei einer bevorzugten Ausführungsform sind ausschließlich diese Teilbereiche aus hochabriebfestem Substrat 2, bevorzugt Leder 2 und der Rest des Fahrzeugsitzes aus einem anderen Material.

Das Sitzkissen 42 weist eine Sitzfläche 47 auf, die beidseitig von zwei Sitzwangen 48a,48b, einer der nächstgelegenen Fahrzeugtüre nahen einstiegsnahen Sitzwange 48a und einer der nächstgelegenen Fahrzeugtüre fernen einstiegsfernen Sitzwange 48b, begrenzt ist. Die Rückenlehne 43 weist eine Rückenauflagefläche 45 auf, die beidseitig von zwei Rückenlehnenwangen 46a,46b, einer der nächstgelegenen Fahrzeugtüre nahen einstiegsnahen Rückenlehnenwange 46a und einer der nächstgelegenen Fahrzeugtüre fernen einstiegsfernen Rückenlehnenwange 46b, begrenzt ist.

Erfindungsgemäß besteht zumindest die der nächstgelegenen Fahrzeugtüre nahe einstiegsnahe Sitzwange 48a und/oder die der nächstgelegenen Fahrzeugtüre nahe einstiegsnahe Rückenlehnenwange 46a aus abriebfestem Leder bzw. einem hochabriebfesten Substrat 2, bevorzugt Leder 2 bzw. ist damit bezogen.

In einer Ausführungsform der vorliegenden Erfindung sind ausschließlich beide Sitzwangen 48a,48b und/oder beide Rückenlehnenwangen 46a,46b des erfindungsgemäßen Fahrzeugsitzes aus einem hochabriebfesten Leder gefertigt bzw. damit bezogen.

Der Rest des Fahrzeugsitzes 41 kann aus beliebigen tauglichen Material bestehen, beispielsweise herkömmlich hergestellten Ledern oder sonstigen tauglichen Materialien, bspw. Textilien.

Das hochabriebfeste Substrat 2, bevorzugt Leder 2 kann in seiner Haptik, Optik, Farbe, Narbung und/oder in seinem Glanzgrad an das Material, aus dem der Rest des Fahrzeugsitzes 41 hergestellt ist, beispielsweise das herkömmliche Leder oder den restlichen Bezug bzw. das sonstige Material so angeglichen werden, dass der Sitzbezug wie ein durchgehend aus einem einzigen Leder gefertigter Fahrzeugsitzes 41 erscheint.

Sportsitze, die besonders hart gepolstert sind, neigen naturgemäß zu vorzeitigem Abriebverschleiß. Erfindungsgemäß kann bei Sportsitzen auch der gesamte Sitz aus dem hochabriebfesten Substrat, insbesondere hochabriebfestem Leder gefertigt werden.

Auch eine Kombination mit einer Sitzfläche aus Textil und den Sitzwangen aus hochabriebfesten Substrat 2, bevorzugt Leder 2 bietet diesen Vorteil.

Die hochabriebfesten Sitzbezüge können mit beliebigen Oberflächengestaltungen versehen werden. Es gibt weltweit große Produktionskapazitäten für die Herstellung von herkömmlichen Ledern. Diese Leder sind in geprägter Ausführung auch relativ preiswert. Durch die Kombination mit den erfindungsgemäßen Ledern bei der Sitzbezuggestaltung werden die Schwächen der herkömmlichen Leder, die an den genannten Stellen zu Reklamationen führen, beseitigt.

Die Oberfläche des hochabriebfesten Leders kann verschiedenartig ausgebildet sein, z.B. in Form von Veloursleder und kann gegebenenfalls mit Polyurethan-Härchen versehen sein.

Ein weiterer Gegenstand der vorliegenden Erfindung sind Substrate, umfassend mehrere Schichten, nämlich
einen Substratgrundkörper,
eine innere Schicht mit einer eine Stärke zwischen 0,008 mm und 0,03 mm, bestehend aus zwei aus verfestigtem, vernetztem Polyurethan gebildeten Lagen mit einem Erweichungspunkt (im getrockneten Zustand, ohne Zugabe von Vernetzer) zwischen 45 und 90°C,
eine äußere Schicht mit einer Stärke zwischen 0,01 mm und 0,08 mm, bestehend aus mehreren Lagen, die im wesentlichen aus verfestigtem, vernetztem Polyester-Polyurethan oder vorzugsweise Polycarbonat-Polyurethan oder Polyether-Polyurethan und gegebenenfalls einem oder mehreren Pigmenten bestehen, wobei die äußere Schicht einen Erweichungspunkt zwischen 180°C und 240°C aufweist (im getrockneten Zustand, ohne Zugabe von Vernetzer).

Die erfindungsgemäßen Substrate sind vorzugsweise hochabriebfest.

Gegebenenfalls können die erfindungsgemäßen hochabriebfesten Substrate noch eine mittlere Schicht und/oder eine Zwischenschicht umfassen.

Dabei weisen die erfindungsgemäßen hochabriebfesten Substrate eine Wasserdampfdurchlässigkeit im Bereich von 1 bis 4 mg/cm²·h, bevorzugt von mehr als 3 mg/cm²·h, und eine Wasserdampfzahl von mehr als 25 mg/cm² auf, bestimmt beispielsweise nach Europanorm E 344-1.

Erfindungsgemäße hochabriebfeste Substrate können auf Basis von beliebigen Materialien hergestellt werden, beispielsweise Textilien wie Gewirken oder Geweben aus natürlichen oder synthetischen Fasern, weiterhin Vliesstoffe (Non-Wovens), Substrate aus Mikrofasern, und insbesondere um Leder.

Dabei dient Textil oder Vliesstoff oder insbesondere Leder als Substratgrundkörper.

Wenn es sich bei dem Substratgrundkörper um Leder handelt, so kann man die vorstehend beschriebene Beschichtung auch als Zurichtung bezeichnen.

In einer bevorzugten Ausführungsform der vorliegenden Erfindung handelt es sich bei erfindungsgemäßem Substrat um hochabriebfestes Ledern und es handelt sich bei dem Substratgrundkörper um ein gegerbtes Leder, vorzugsweise um ein chromfrei gegerbtes Leder.

In einer Ausführungsform der vorliegenden Erfindung weist die äußere Schicht ausgeprägte elastomere Eigenschaften und keine thermoplastischen Eigenschaften auf und stelltsich nach einer Dehnung bei einer Temperatur zwischen 100°C und 120°C vollständig zurück, wogegen die innere Schicht im Vergleich zur äußeren Schicht keine ausgeprägten elastomeren Eigenschaften aufweist und bei einer Temperatur zwischen 100°C und 120°C eine größere bleibende Dehnung aufweist als die äußere Schicht.

In einer Ausführungsform der vorliegenden Erfindung können erfindungsgemäße hochabriebfeste Substrate eine wie vorstehend beschriebene mittlere Schicht und vorzugsweise eine wie vorstehend beschriebene Zwischenschicht umfassen.

Herstellungsweise und weitere Eigenschaften der erfindungsgemäßen hochabriebfesten Substraten sind vorstehend beschrieben.

Ein weiterer Gegenstand der vorliegenden Erfindung ist die Verwendung eines erfindungsgemäßen hochabriebfesten Substrates, insbesondere eines erfindungsgemäßen hochabriebfesten Leders (2), das wie vorstehend beschrieben ist, zum Beziehen bzw. Ausstatten von insbesondere der nächstgelegenen Fahrzeugtüre nahen, insbesondere zugewandten, bzw. von erfahrungsgemäß der größten Beanspruchung beim Ein- und Aussteigen unterliegenden Oberflächen von Teilbereichen eines Fahrzeugsitzes (41) oder zur Herstellung von Schuhschäften.

Speziell ist Gegenstand der vorliegenden Erfindung die Verwendung eines erfindungsgemäßen hochabriebfesten Substrates und insbesondere eines erfindungsgemäßen hochabriebfesten Leders (2) zur Herstellung von Schuhschäften oder zum Beziehen bzw. Ausstatten eines Fahrzeugsitzes (41) umfassend ein Sitzkissen (42) und eine Rückenlehne (43), wobei das Sitzkissen (42) eine Sitzfläche (47) aufweist, die beidseitig von zwei Sitzwangen (48a,48b) begrenzt ist und die Rückenlehne (43) eine Rückenauflagefläche (45) aufweist, die beidseitig von zwei Rückenlehnenwangen (46a,46b) begrenzt ist, wobei zumindest die der nächstgelegenen Fahrzeugtüre nahe einstiegsnahe Sitzwange (48a) und/oder die der nächstgelegenen Fahrzeugtüre nahe einstiegsnahe Rückenlehnenwange (46a) bzw. insbesondere der Fahrzeugtüre zugewandte Teilbereiche der einstiegsnahen Sitzwange (48a) und/oder der einstiegsnahen Rückenlehnenwange (46a), mit dem Substrat bzw. Leder (2) bezogen bzw. ausgestattet werden.

In den Zeichnungen ist die Erfindung anhand von Ausführungsbeispielen dargestellt.
Fig. 1 zeigt eine Ausführungsform eines erfindungsgemäßen, mit einer Beschichtung versehenen Narbenleders im Querschnitt.
Fig. 2 stellt in stark vergrößertem Maßstab einen Querschnitt im Bereich einer in der äußeren Schicht angeordneten Pore dar.
Fig. 3 zeigt eine weitere Ausführungsform eines erfindungsgemäßen, mit einer Beschichtung versehenen Narbenleders.
Fig. 4 zeigt einen Zuschnitt eines erfindungsgemäßen Leders für einen Lenkradüberzug und
Fig. 5 für einen Fahrzeugsitz.
Fig. 6 zeigt schematisch eine Vorrichtung, mittels welcher die Beschichtung eines Leders erfolgt.
Fig. 7 zeigt einen erfindungsgemäßen Fahrzeugsitz.

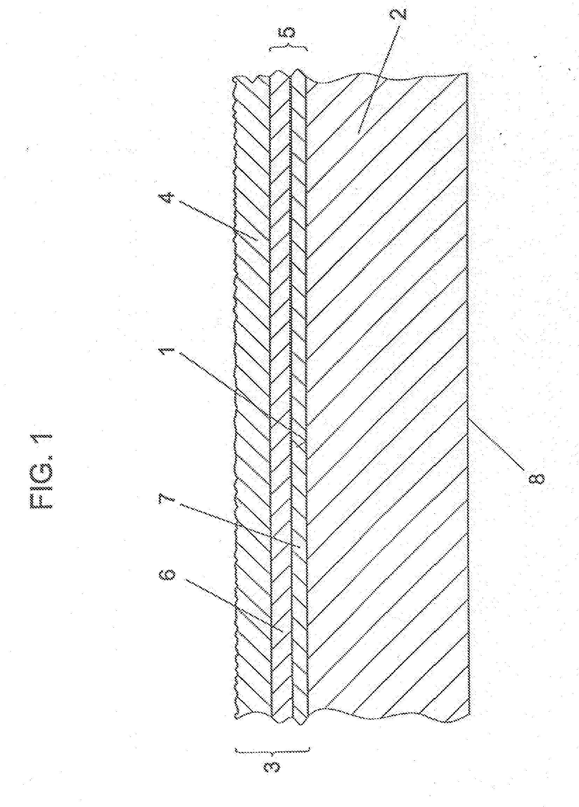

Das mit einer Beschichtung versehene Leder 2 aus Fig. 1 besteht entweder aus einem geschliffenen Spaltleder, wobei ein Rinderspalt-Doppel-Croupon im allgemeinen eine Größe bis zu 2,2 m² und eine Stärke bzw. Dicke zwischen 1,0 und 2,4 mm aufweist. Bevorzugt besteht das Leder 2 aus einem Narbenleder, dessen Narbenschicht durch Bearbeitung mit einem Schleifpapier mit einer Körnung zwischen 100 und 1000, vorzugsweise einer Körnung zwischen 180 und 400 leicht angeschliffen wurde, so dass die Oberfläche leicht bis mäßig faserig ist.

Die auf die faserige Oberfläche 1 des Leders 2 aufgebrachte Beschichtung 3 besteht aus einer äußeren Schicht 4 und einer inneren Schicht 5, welche aus zwei Lagen 6, 7 gebildet ist. Das Leder 2 kann vor dem Aufbringen der Beschichtung beispielsweise auf ein für die Herstellung eines Schuhschaftes oder eines Fahrzeugsitzes benötigtes Format zugeschnitten werden. Es kann aber auch das Leder 2 in seiner Gesamtheit zugerichtet werden und es können anschließend mehrere kleinere Formatteile herausgeschnitten oder ausgestanzt werden.

Die Gesamtdicke der Beschichtung 3 beträgt weniger als 0,08 mm, vorzugsweise weniger als 0,06 mm.

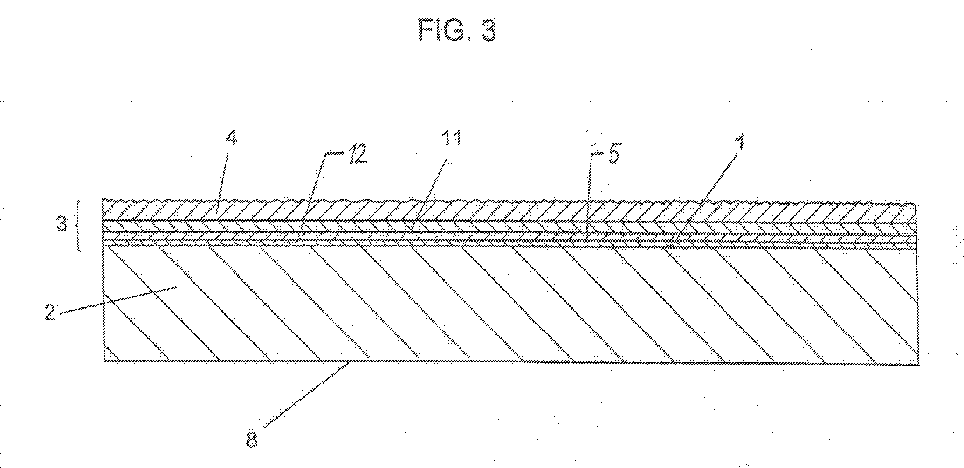

Fig. 3 zeigt eine Ausführungsform, bei welcher die Beschichtung 3 aus einer äußeren Schicht 4 und einer inneren Schicht 5 sowie einer mittleren Schicht 11 sowie gegebenenfalls einer extrem dünnen Zwischenschicht 12 besteht, die jedoch auch weggelassen werden kann.

Fig. 4 zeigt einen aus einem erfindungsgemäßen Leder hergestellten Zuschnitt für einen aus einem erfindungsgemäßen Leder hergestellten Lenkradüberzug, der im Sprossenbereich 13 eine Kohlenstoffgewebeoptik und im übrigen Bereich 14 eine Nubukoptik der äußeren Schicht 4 aufweist, wobei diese Optik durch eine entsprechende Strukturierung der aus Silikon bestehenden Oberseite der Unterlage hergestellt ist. Es kann aber diese Strukturierung der Oberseite der Unterlage auch derart sein, dass auf der Sichtseite der äußeren Schicht 4 ein Schriftzug, beispielsweise "Airbag" oder ein gesticktes Firmenlogo aufscheinen. Außerdem können die Bereiche 12 und 13 unterschiedliche Farben aufweisen. Weiterhin kann die Strukturierung der Oberseite der Unterlage derart sein, dass, wenn aus einem Leder mehrere Formatteile hergestellt werden sollen, entsprechende Markierungen vorhanden sind, die der Umrandung der in der Folge auszuschneidenden bzw. auszustanzenden Formatteile entsprechen.

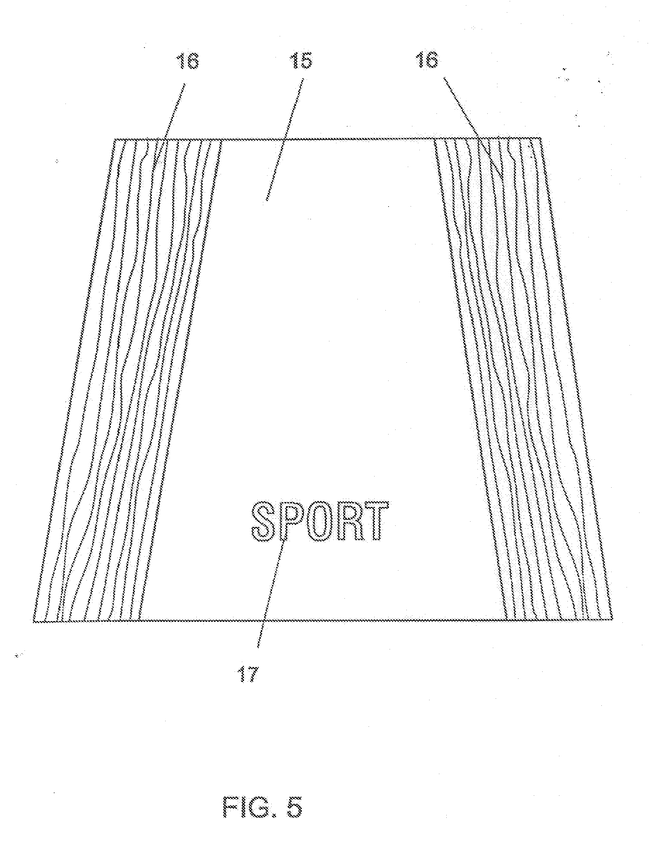

Fig. 5 zeigt einen Zuschnitt für einen Fahrzeugsitz. Der Mittelteil 15 weist hierbei eine äußere Schicht 4 mit einer Narbenoberfläche auf, ist somit im wesentlichen glatt, wogegen die seitlichen Berandungen 16 beispielsweise eine nubukartige Oberfläche mit erhöhten Reibungswerten besitzen und somit ein seitliches Verrutschen der auf dem Sitz befindlichen Person verhindern. Auch hier kann der Mittelteil 15 eine andere Farbe aufweisen als die Berandungen 16. Es kann somit die Oberfläche ein und desselben Zuschnittes verschieden gestaltet und daher an die jeweiligen Anforderungen angepasst werden. Bei der Herstellung des Fahrzeugsitzes kann weiterhin ein Schriftzug 17 mitgeformt werden.

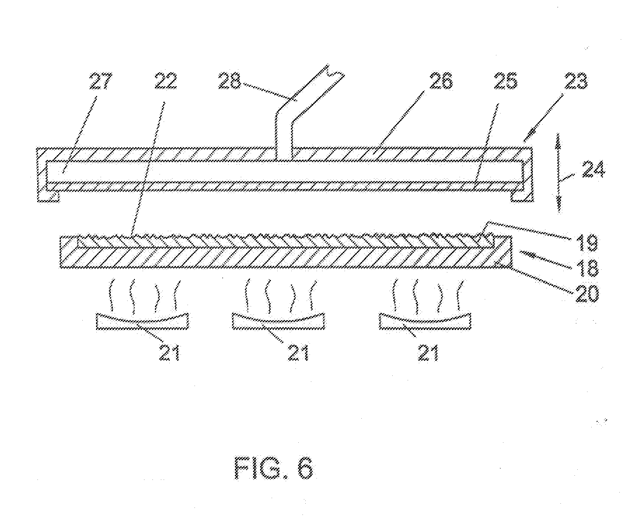

Fig. 6 zeigt die für die Herstellung der Beschichtung erforderliche Vorrichtung. Diese weist eine Unterlage 18 auf, deren Oberseite 19 aus Silikonkautschuk und deren Unterseite 20 aus Metall besteht. Unterhalb der Unterseite 20 sind schematisch dargestellte Wärmequellen 21 vorgesehen, über welche die Unterseite 20 und über diese die Oberseite 19 erwärmt wird. Die Oberfläche 22 der aus Silikonkautschuk bestehenden Oberseite 19 weist eine Strukturierung auf, welche der Sichtseite der herzustellenden Beschichtung 3 entspricht. Bei der Herstellung dieser Beschichtung wird zunächst auf diese eine Strukturierung aufweisende Oberfläche 22 eine Polyurethandispersion mit elastomeren Eigenschaften unter einem hohen Druck luftlos (airless) aufgesprüht und durch Wärmezufuhr mittels der Wärmequellen 21 verfestigen gelassen. Das Aufsprühen kann hierbei in mehreren Arbeitsschritten nacheinander erfolgen, so dass dann die äußere Schicht aus mehreren, jedoch eine chemisch homogene Einheit bildenden Lagen besteht, die unterschiedliche Pigmentanteile enthalten können. Vorzugsweise weist die durch den ersten Sprühauftrag einer Polyurethan enthaltenden Dispersion auf die heiße, d. h. 80 bis 150°C aufweisende Unterlage gebildete Lage einen geringeren Pigmentanteil auf als die übrigen Lagen, wodurch die Farbabriebfestigkeit wesentlich verbessert wird. Die Oberfläche 22 weist dabei eine Temperatur von etwa 100°C auf. Auf die so gebildete verfestigte äußere Schicht der Beschichtung wird bei einer bevorzugten Herstellungsmethode eine einen Vernetzer enthaltende Polyurethandispersion sowie auf die angeschliffene Oberfläche eines Leders gleichfalls eine einen Vernetzer enthaltende Polyurethandispersion aufgebracht, wobei in der Folge das Wasser diesen Polyurethandispersionen entzogen wird. Das Wasser auf der auf der äußeren Schicht aufgebrachten Polyurethandispersion verdampft hierbei durch Wärmezufuhr mittels der Wärmequellen 21, das Wasser der auf die Oberfläche des Leders aufgebrachten Polyurethandispersion zieht sich größtenteils in das Leder ein.

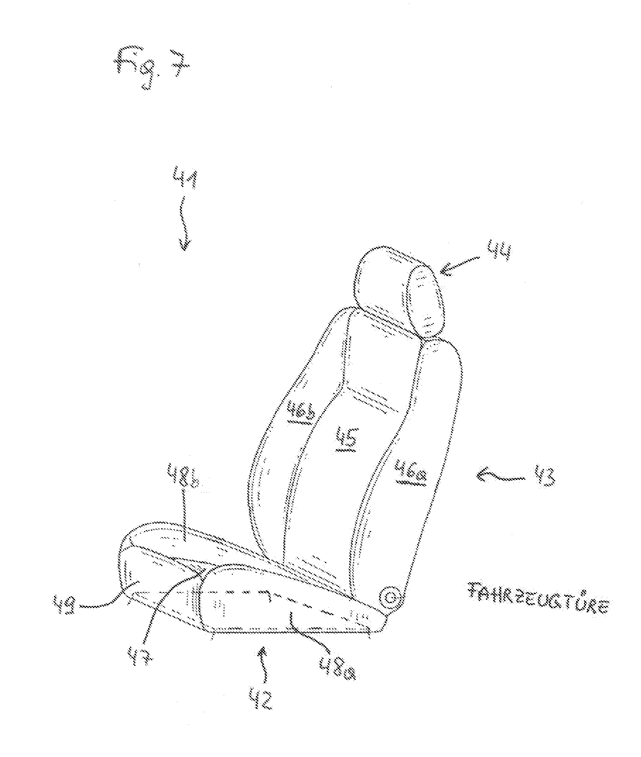

Fig. 7 zeigt einen Fahrzeugsitz 41 mit einem Sitzkissen 42, einer Rückenlehne 43 und einer Kopfstütze 44. Bei diesem Fahrzeugsitz 41 können gemäß einer bevorzugten Ausführungsform, die der nächstgelegenen Fahrzeugtüre nahen und die erfahrungsgemäß der größten Beanspruchung beim Ein- und Aussteigen unterliegenden Teilbereiche der Oberfläche des Fahrzeugsitzes 41, d.h. des 42 und/oder der Rückenlehne 43, aus hochabriebfestem Leder 2 gefertigt bzw. damit bezogen sein. Bei einer bevorzugten Ausführungsform sind ausschließlich diese Teilbereiche aus hochabriebfestem Leder 2 und der Rest des Fahrzeugsitzes 41 aus einem anderen Material.

Zumindest die der nächstgelegenen Fahrzeugtüre nahe einstiegsnahe Sitzwange 48a und/oder die der nächstgelegenen Fahrzeugtüre nahe einstiegsnahe Rückenlehnenwange 46a besteht aus abriebfestem Leder bzw. einem hochabriebfesten Leder 2 bzw. ist damit bezogen.

## Patentansprüche

1. Fahrzeugsitz (41) mit Sitzkissen (42) und Rückenlehne (43), bei dem die der nächstgelegenen Fahrzeugtüre nahen Teilbereiche der Oberfläche des Fahrzeugsitzes (41), insbesondere des Sitzkissens (42) und/oder der Rückenlehne (43), aus einem hochabriebfesten Substrat gefertigt oder damit bezogen sind.

2. Fahrzeugsitz (41), mit einem Sitzkissen (42) und einer Rückenlehne (43), wobei das Sitzkissen (42) eine Sitzfläche (47) aufweist, die beidseitig von zwei Sitzwangen (48a,48b) begrenzt ist und die Rückenlehne (43) eine Rückenauflagefläche (45) aufweist, die beidseitig von zwei Rückenlehnenwangen (46a,46b) begrenzt ist, **dadurch gekennzeichnet, dass** die der nächstgelegenen Fahrzeugtüre nahe einstiegsnahe Sitzwange (48a) und/oder die der nächstgelegenen Fahrzeugtüre nahe einstiegsnahe Rückenlehnenwange (46a), bzw. der nächstgelegenen Fahrzeugtüre zugewandte Teilbereiche der einstiegsnahen Sitzwange (48a) und/oder der einstiegsnahen Rückenlehnenwange (46a) aus einem hochabriebfesten Substrat gefertigt bzw. damit bezogen sind.

3. Fahrzeugsitz nach Anspruch 1 oder 2, **dadurch gekennzeichnet, dass** es sich bei hochabriebfestem Substrat um hochabriebfestes Leder handelt.

4. Fahrzeugsitz nach Anspruch 2 oder 3, **dadurch gekennzeichnet, dass** ausschließlich die der nächstgelegenen Fahrzeugtüre nahe einstiegsnahe Sitzwange (48a) und/oder die der nächstgelegenen Fahrzeugtüre nahe einstiegsnahe Rückenlehnenwange (46a) aus einem hochabriebfesten Substrat gefertigt bzw. damit bezogen sind.

5. Fahrzeugsitz nach einem der Ansprüche 2 bis 4, **dadurch gekennzeichnet, dass** zumindest die Sitzfläche (47), die Rückenauflagefläche (45), eine gegebenenfalls vorgesehene Kopfstütze (44) und/oder die frontale Sitzvorderfläche (49) des Sitzkissens (42) aus einem beliebigen tauglichen Material gefertigt bzw. damit bezogen sind.

6. Fahrzeugsitz nach einem der Ansprüche 2 bis 5, **dadurch gekennzeichnet, dass** zumindest die Oberfläche der einstiegsfernen Sitzwange (48b) und der einstiegsfernen Rückenlehnenwange (46b), der Sitzfläche (47) und/oder der Rückenauflagefläche (45), und gegebenenfalls auch der Kopfstütze (44) und/oder der frontalen Sitzvorderfläche (49), die gleiche Farbe, den gleichen Glanzgrad, die gleiche Haptik und/oder die gleiche Narbung wie die einstiegsnahe Sitzwange (48a) und/oder die einstiegsnahe Rückenlehnenwange (46a) aufweisen.

7. Fahrzeugsitz nach einem der Ansprüche 1 bis 6, **dadurch gekennzeichnet, dass** das in den Ansprüchen 1 bis 6 erwähnte hochabriebfeste Substrat ein an sich bekanntes, auf seiner angeschliffenen Oberfläche mit einer Beschichtung versehenes Leder (2) ist, wobei die Beschichtung aus mehreren Schichten besteht, von welchen die äußere, eine bestimmte Oberflächengestaltung aufweisende, auf einer heißen, eine der Oberflächengestaltung entsprechende Strukturierung aufweisenden Unterlage vorfabrizierte Schicht aus einer verfestigten, vernetzten, hydrolysefesten, lichtechten, Polyurethan enthaltenden Dispersion gebildet ist und eine Stärke zwischen 0,01 mm und 0,08 mm aufweist, und von welchen eine innere Schicht mit der angeschliffenen Oberfläche des Leders (2) verbunden ist und aus einer verfestigten, stark vernetzten, hydrolysefesten, lichtechten, Polyurethan gebildet ist und eine geringere Härte als jene der äußeren Schicht aufweist.

8. Fahrzeugsitz nach Anspruch 7, wobei zwischen der äußeren Schicht und der inneren Schicht eine mittlere Schicht enthalten ist, die aus einer verfestigten, vernetzten, hydrolysefesten, lichtechten, Polyurethan enthaltenden Dispersion gebildet ist und eine geringere Shore-Härte als jene der äußeren Schicht aufweist und mit dieser äußeren Schicht untrennbar verbunden ist.

9. Fahrzeugsitz nach Anspruch 7 oder 8, **dadurch gekennzeichnet, dass** die innere Schicht eine Stärke zwischen 0,008 mm und 0,03 mm aufweist.

10. Fahrzeugsitz nach einem der Ansprüche 7 bis 9, **dadurch gekennzeichnet, dass** die äußere Schicht ausgeprägte elastomere Eigenschaften und keine thermoplastischen Eigenschaften aufweist und sich nach einer Dehnung bei einer Temperatur zwischen 100°C und 120°C vollständig zurückstellt, wogegen die innere Schicht im Vergleich zur äußeren Schicht keine ausgeprägten elastomeren Eigenschaften aufweist und bei einer Temperatur zwischen 100°C und 120°C eine größere bleibende Dehnung aufweist als die äußere Schicht.

11. Fahrzeugsitz nach einem der Ansprüche 7 bis 10, **dadurch gekennzeichnet**, die äußere Schicht porös ausgebildet ist.

12. Fahrzeugsitz nach einem der Ansprüche 7 bis 11, **dadurch gekennzeichnet, dass** in die äußere Schicht Mikrohohlkugeln eingebettet sind.

13. Fahrzeugsitz nach einem der Ansprüche 7 bis 12, **dadurch gekennzeichnet, dass** in die innere Schicht Mikrohohlkugeln eingebettet sind.

14. Fahrzeugsitz nach einem der Ansprüche 7 bis 13, **dadurch gekennzeichnet, dass** die innere Schicht eine andere chemische Beschaffenheit aufweist als die äußere Schicht.

15. Fahrzeugsitz nach einem der Ansprüche 7 bis 15, **dadurch gekennzeichnet, dass** zwischen der angeschliffenen Oberseite des Leders (2) und der inneren Schicht eine von einem verfestigten, Feststoffe enthaltenden Klebstoff gebildete Zwischenschicht enthalten ist.

16. Substrate, umfassend mehrere Schichten:
einen Substratgrundkörper,
eine innere Schicht mit einer eine Stärke zwischen 0,008 mm und 0,03 mm, bestehend aus zwei aus verfestigtem, vernetztem Polyurethan gebildeten Lagen mit einem Erweichungspunkt zwischen 45 und 90°C,
eine äußere Schicht mit einer Stärke zwischen 0,01 mm und 0,08 mm, bestehend aus mehreren Lagen, die im wesentlichen aus verfestigtem, vernetztem Polyester-Polyurethan oder Polycarbonat-Polyurethan oder Polyether-Polyurethan und gegebenenfalls einem oder mehreren Pigmenten bestehen, wobei die äußere Schicht einen Erweichungspunkt zwischen 180°C und 240°C aufweist,
wobei Substrate eine Wasserdampfdurchlässigkeit von im Bereich von 1 bis 4 mg/cm²·h und eine Wasserdampfzahl von mehr als 25 mg/cm² aufweisen.

17. Substrate nach Anspruch 16, **dadurch gekennzeichnet, dass** es sich bei ihnen um hochabriebfeste Leder handelt und dass es sich bei dem Substratgrundkörper um ein gegerbtes Leder handelt.

18. Verwendung eines Substrats nach Anspruch 16 oder 17 zum Beziehen bzw. Ausstatten von, insbesondere der nächstgelegenen Fahrzeugtüre nahen Oberflächen von Teilbereichen eines Fahrzeugsitzes (41) oder zur Herstellung von Schuhschaften.

19. Verwendung eines Substrats nach Anspruch 16 oder 17 zur Herstellung von Schuhschaften oder zum Beziehen bzw. Ausstatten eines Fahrzeugsitzes (41) umfassend ein Sitzkissen (42) und eine Rückenlehne (43), wobei das Sitzkissen (42) eine Sitzfläche (47) aufweist, die beidseitig von zwei Sitzwangen (48a,48b) begrenzt ist und die Rückenlehne (43) eine Rückenauflagefläche (45) aufweist, die beidseitig von zwei Rückenlehnenwangen (46a,46b) begrenzt ist, wobei zumindest die der nächstgelegenen Fahrzeugtüre nahe einstiegsnahe Sitzwange (48a) und/oder die der nächstgelegenen Fahrzeugtüre nahe einstiegsnahe Rückenlehnenwange (46a) bzw. mit dem Leder (2) bezogen bzw. ausgestattet werden.
